(19) Europäisches Patentamt
European Patent Office
Office européen des brevets

(11) **EP 4 382 385 B1**

(12) **EUROPEAN PATENT SPECIFICATION**

(45) Date of publication and mention
of the grant of the patent:
**08.10.2025 Bulletin 2025/41**

(21) Application number: **22760785.0**

(22) Date of filing: **01.08.2022**

(51) International Patent Classification (IPC):
***B60W 30/16*** (2020.01)

(52) Cooperative Patent Classification (CPC):
**B60W 30/16;** B60W 2300/36; B60W 2554/402;
B60W 2554/4041; B60W 2554/4049;
B60W 2720/106; B60Y 2200/12

(86) International application number:
**PCT/IB2022/057137**

(87) International publication number:
**WO 2023/012647 (09.02.2023 Gazette 2023/06)**

(54) **CONTROL DEVICE AND CONTROL METHOD FOR BEHAVIOR OF A LEAN VEHICLE**

STEUERUNGSVORRICHTUNG UND STEUERUNGSVERFAHREN FÜR DAS VERHALTEN EINES NEIGEFAHRZEUGS

DISPOSITIF ET PROCÉDÉ DE COMMANDE DU COMPORTEMENT D'UN VÉHICULE À INCLINAISON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.08.2021 JP 2021127026**

(43) Date of publication of application:
**12.06.2024 Bulletin 2024/24**

(73) Proprietor: **Robert Bosch GmbH
70442 Stuttgart (DE)**

(72) Inventor: **PFAU, Lars
Yokohama-shi, Kanagawa 224-8501 (JP)**

(56) References cited:
**EP-A1- 3 800 099       DE-A1- 102009 021 476
DE-A1- 102019 205 881    US-A- 6 032 097**

## Description

Technical Field

The present invention relates to a controller that maneuvers a leaning vehicle, and a control method for maneuvering the leaning vehicle.

Background Art

Controllers are known to maneuver a leaning vehicle. For example, WO 2018/197965 A1 discloses a controller that acquires information about environment surrounding a leaning vehicle and executes an automatic acceleration operation and an automatic deceleration operation based on the information.

Citation List

Patent Literature

> PTL 1: WO 2018/197965 A1
> PTL 2: EP 3 800 099 A1
> PTL 3: US 6 032 097 A

Summary of Invention

Technical Issues

According to such conventional techniques, a controller maneuvers a leaning vehicle in a manner that an automatic acceleration and deceleration operation is executed when a group ride mode is operable. The group ride mode is a mode in which lean vehicles including the lean vehicle travels in a group. More specifically, as the automatic acceleration and deceleration operation, a positional relationship adjustment control is executed to adjust a positional relationship between the lean vehicle and one of other vehicles located around the lean vehicle. Here, leaning vehicles are extremely small in size of a body as compared to other types of vehicles (e.g., passenger cars and trucks). As such, the other vehicles located around the lean vehicle may travel with a small distance between adjacent two vehicles of the other vehicles. Accordingly, it may be difficult to select one vehicle, as a target vehicle in the positional relationship adjustment control, from the other vehicles located around the lean vehicle.

The present invention addresses the above-described issues, and therefore it is an objective of the present invention to provide a controller and a control method that suitably assist a rider in driving a lean vehicle.

Solution to the Issues

As one aspect of the present invention, a controller configured to maneuver a leaning vehicle is provided, as defined by independent claim 1. The controller has an acquisition unit and an execution unit. The acquisition unit acquires, while the leaning vehicle travels, a surrounding environment information that is information about an environment surrounding the leaning vehicle. The execution unit causes the leaning vehicle to execute an automatic acceleration and deceleration operation based on the surrounding environment information acquired by the acquisition unit. When a group ride mode in which the leaning vehicle travels together with a plurality of other leaning vehicles in a group is operable, the execution unit causes the leaning vehicle to execute, as the automatic acceleration and deceleration operation, a positional relationship adjustment control with respect to a virtual moving object that represents a plurality of peripheral vehicles near the leaning vehicle.

As one aspect of the present invention, a control method for maneuvering a leaning vehicle is provided, as defined by independent claim 15. The control method comprises: acquiring, using an acquisition unit of a controller, a surrounding environment information that is information about an environment surrounding the leaning vehicle, the acquisition unit configured to acquire the surrounding environment information while the leaning vehicle travels; and causing, using an execution unit of the controller, the leaning vehicle to execute an automatic acceleration and deceleration operation based on the surrounding environment information acquired by the acquisition unit. When a group ride mode in which the leaning vehicle travels together with a plurality of other leaning vehicles in a group is operable, the execution unit causes the leaning vehicle to execute, as the automatic acceleration and deceleration operation, a positional relationship adjustment control with respect to a virtual moving object that represents a plurality of peripheral vehicles near the leaning vehicle.

Advantageous Effects of Invention

According to the controller and the control method, the execution unit causes the leaning vehicle to execute, as the automatic acceleration and deceleration operation, a positional relationship adjustment control with respect to a virtual moving object that represents a plurality of peripheral vehicles near the leaning vehicle when a group ride mode in which the leaning vehicle travels together with a plurality of other leaning vehicles in a group is operable. Therefore, the automatic acceleration and deceleration operation can be executed in the leaning vehicle even in a situation specific to leaning vehicles, i.e., even if the lean vehicle and other lean vehicles travel while being located densely. Thus, the rider can be suitably assisted in driving the lean vehicle.

Brief Description of Drawings

Fig. 1 is a view illustrating a mounting state of a rider supporting system according to an embodiment of the invention to a leaning vehicle.
Fig. 2 is a view illustrating a system configuration of the rider supporting system according to the embodiment of the invention.
Fig. 3 is a view illustrating a configuration of the rider supporting system according to the embodiment of the invention.
Fig. 4 is a view illustrating a configuration of the rider supporting system according to the embodiment of the invention.
Fig. 5 is a view illustrating a configuration of the rider supporting system according to the embodiment of the invention.
Fig. 6 is a view illustrating a configuration of the rider supporting system according to the embodiment of the invention.
Fig. 7 is a view illustrating an operation flow of a controller of the rider supporting system according to the embodiment of the invention.

Description of Embodiments

Hereinafter, a controller and a control method according to the invention will be described with reference to the accompanying drawings.
Note that, a configuration, an operation, and the like which are described below are illustrative only, and the controller and the control method according to the invention are not limited to cases of the configuration, the operation, and the like.
For example, in the following description, description will be given of a case where the controller and the control method according to the invention are used in a rider supporting system of an automatic two-wheeled vehicle, but the controller and the control method according to the invention may be used in a rider supporting system of other leaning vehicles other than the automatic two-wheeled vehicle. The leaning vehicle represents a vehicle in which a vehicle body falls to the right when turning to the right, and the vehicle body falls to the left when turning to the left. Examples of the leaning vehicle include motorcycles (automatic two-wheeled vehicles, and automatic three-wheeled vehicles), bicycles, and the like. Examples of the motorcycles include a vehicle powered by an engine, a vehicle powered by an electric motor, and the like. Examples of the motorcycles include auto bicycles, scooters, electric scooters, and the like. The bicycles represent a vehicle that can be propelled on a road by a rider pedaling force applied to a pedal. Examples of the bicycles include ordinary bicycles, electrically power assisted bicycles, electric bicycles, and the like.

In addition, in the following description, the same or similar description will be appropriately simplified or omitted. In addition, in the drawings, the same reference numeral will be given to the same or similar portion, or the reference numeral will be omitted. In addition, minute structures are appropriately simplified or omitted in the drawings.

Embodiment

Hereinafter, a rider supporting system according to an embodiment will be described.

<Configuration of Rider Supporting System>

A configuration of the rider supporting system according to the embodiment will be described.

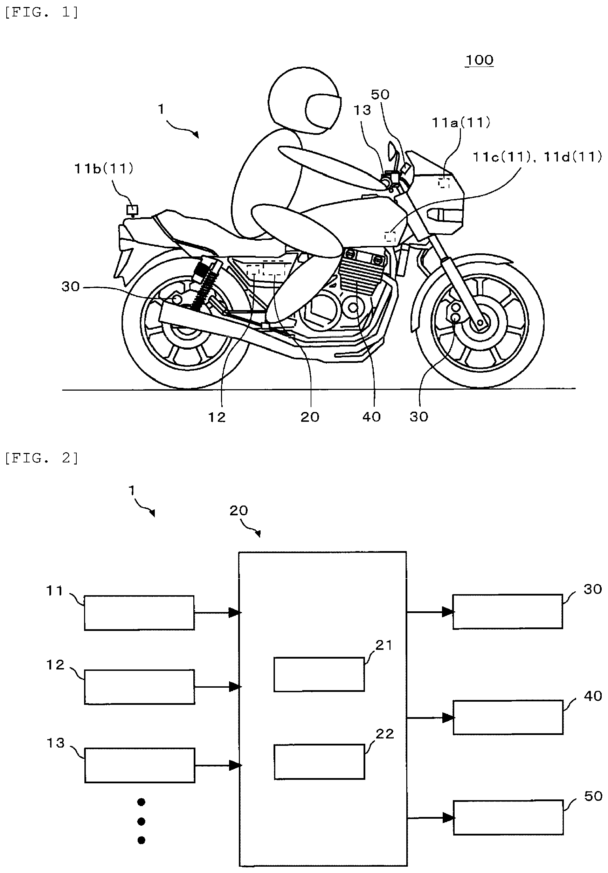

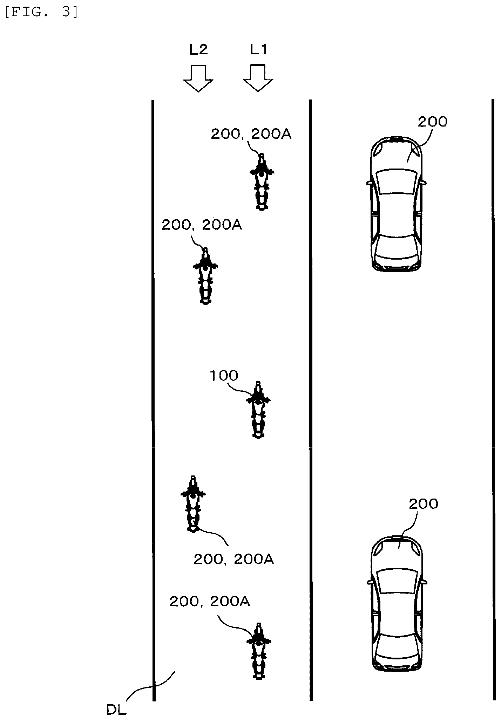

Fig. 1 is a view illustrating a mounting state of the rider supporting system according to the embodiment of the invention to the leaning vehicle. Fig. 2 is a view illustrating a system configuration of the rider supporting system according to the embodiment of the invention. Fig. 3 to Fig. 6 are views illustrating a configuration of the rider supporting system according to the embodiment of the invention.
As illustrated in Fig. 1 and Fig. 2, a rider supporting system 1 is mounted to a leaning vehicle 100. For example, the rider supporting system 1 includes a surrounding environment sensor 11, a behavior sensor 12, a setting input device 13, a controller (ECU) 20, a braking device 30, a drive device 40, and a notification device 50.
In the rider supporting system 1, the controller 20 executes a rider supporting operation of supporting driving of the leaning vehicle 100 by a rider by using an output from the surrounding environment sensor 11 and the behavior sensor 12, and an output from the setting input device 13. The controller 20 outputs a command to various devices (for example, the braking device 30, the drive device 40, the notification device 50, and the like), and executes the rider supporting operation. The controller 20 receives an output from various sensors (not illustrated) configured to detect another information (for example, information about an operation state of the braking device 30 by the rider, information on an operation state of the drive device 40 by the rider, and the like) as necessary. The other information may be, e.g., information about an operation state of the braking device 30 by the rider, and information about an operation state of the drive device 40 by the rider. Respective parts of the rider supporting system 1 may be used exclusively for the rider supporting system 1, or may be shared with other systems.
For example, the surrounding environment sensor 11 may be a surrounding environment sensor 11a facing a forward side of the leaning vehicle 100, a surrounding environment sensor 11b facing a backward side of the leaning vehicle 100, a surrounding environment sensor 11c facing a leftward side of the leaning vehicle 100, a surrounding environment sensor 11d facing a rightward side of the leaning vehicle 100, or a combination thereof. For example, the surrounding environment sensors 11a, 11b, 11c, and 11d are a radar, a lidar sensor, an ultrasonic sensor, a camera, and the like, respectively. At least a part of the surrounding environment sensor 11c and the surrounding environment sensor 11d may be substituted with the surrounding environment sensor 11a or the surrounding environment sensor 11b.

Examples of the behavior sensor 12 include a vehicle speed sensor, an inertial sensor (IMU), and the like. The vehicle speed sensor detects a speed occurring in the leaning vehicle 100. The vehicle speed sensor may detect other physical quantities capable of being substantially converted into the speed occurring in the leaning vehicle 100. The inertial sensor detects acceleration of three axes and an angular velocity of three axes (roll, pitch, and yaw) which are occurring in the leaning vehicle 100. The three axes are a front-rear direction of the leaning vehicle 100 (i.e., a longitudinal direction), a left-right direction of the leaning vehicle 100 (i.e., a lateral direction), and an up-down direction of the leaning vehicle 100 (i.e., a height direction). The inertial sensor may detect other physical quantities capable of being substantially converted into the acceleration of the three axes and the angular velocity of the three axes which are occurring in the leaning vehicle 100. In addition, the inertial sensor may detect only a part of the acceleration of the three axes and the angular velocity of the three axes.

The setting input device 13 receives an input of various settings made by a rider. For example, the rider can switch validity and invalidity of various rider supporting operations by using the setting input device 13. In addition, for example, the rider can set various modes or various threshold values (for example, an upper limit value, a lower limit value, and the like) used in the various rider supporting operations by using the setting input device 13. The setting input device 13 may receive an operation by the body (for example, hands, foots, and the like) of the rider, and may receive a voice emitted from the rider. In addition, the setting input device 13 may be provided to the leaning vehicle 100, or may be provided to equipment (for example, a helmet, a glove, or the like) accompanying the leaning vehicle 100.

The controller 20 includes at least an acquisition unit 21 and an execution unit 22. All parts or each part of the controller 20 may be collectively provided in one casing, or may be divided into a plurality of casings. In addition, all parts or each part of the controller 20 may be constituted, for example, by a microcomputer, a microprocessor unit, or the like, may be configured by updatable firmware or the like, or may be a program module that is executed by a command from a CPU or the like.

The acquisition unit 21 acquires a surrounding environment information that is information about environment surrounding the leaning vehicle 100. The acquisition unit 21 acquires the surrounding environment information based on an output from the surrounding environment sensor 11 while the leaning vehicle 100 travels. The surrounding environment information includes positional relationship information between the leaning vehicle 100 and a target (for example, a vehicle, an obstacle, a road facility, a human being, an animal, or the like) located at the periphery of the leaning vehicle 100. Examples of the positional relationship information include information such as a relative position, a relative distance, a relative speed, relative acceleration, relative jerk, a passing time difference, and a prediction time up to collision. The positional relationship information may another physical quantity information capable of being substantially converted into the above-described information.

The execution unit 22 causes the leaning vehicle 100 to execute an automatic acceleration and deceleration operation based on the positional relationship information acquired by the acquisition unit 21 as the rider supporting operation. In execution of the automatic acceleration and deceleration operation, the execution unit 22 outputs a command to the braking device 30 or the drive device 40. The braking device 30 brakes the leaning vehicle 100. The drive device 40 drives the leaning vehicle 100 as a power source of the leaning vehicle 100. The braking device 30 may be controlled to generate or increase deceleration, or may be controlled to generate or increase acceleration. The drive device 40 may be controlled to generate or increase acceleration, or may be controlled to generate or increase deceleration.

In execution of the rider supporting operation, the execution unit 22 causes the notification device 50 to execute a notification operation to a rider as necessary. The notification device 50 may give a notification to the rider by display (that is, perception where a visual organ is used as a sensory organ), may give a notification to the rider by a sound (that is, perception where an auditory organ is used as a sensory organ), or may give a notification to the rider by vibration (that is, perception where a tactile organ is used as a sensory organ). Examples of the notification device 50 include a display, a lamp, a speaker, a vibrator, and the like. The notification device 50 may be provided to the leaning vehicle 100, or may be provided to equipment (for example, a helmet, a glove, or the like) accompanying the leaning vehicle 100.

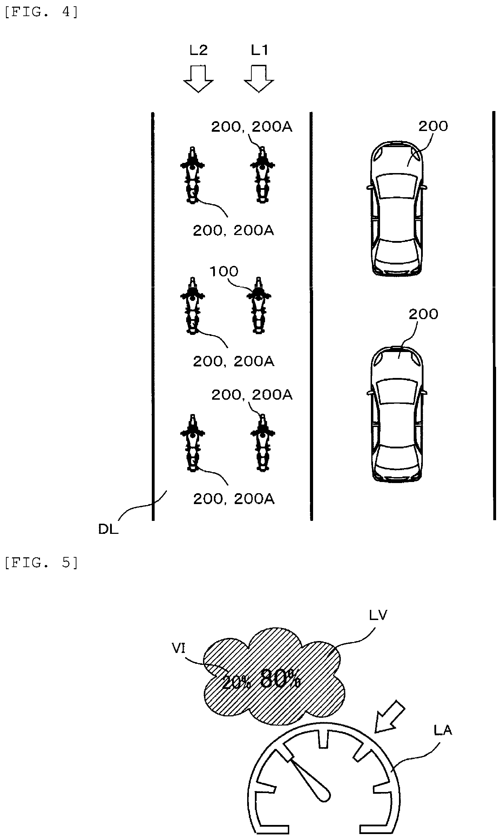

The execution unit 22 determines whether or not a group ride mode is operable while the leaning vehicle 100 travels. As illustrated in Fig. 3 and Fig. 4, the group ride mode is a mode in which the leaning vehicle 100 and other leaning vehicles 200A travel in a group, that is, as a group.

For example, validity and invalidity of the group ride mode can be automatically switched by the execution unit 22 based on the surrounding environment information acquired by the acquisition unit 21. The execution unit 22 determines whether or not the group ride mode is operable based on information about the switching. The execution unit 22 determines whether or not traveling of the leaning vehicle 100 and the plurality of other leaning vehicles 200A which are peripheral vehicles 200 of the leaning vehicle 100 in a specific mode (for example, a mode in which two lines are formed so that the leaning vehicle 100 and the plurality of other leaning vehicles 200A are arranged in a zigzag pattern as illustrated in Fig. 3, a mode in which two lines are formed so that the leaning vehicle 100 and the plurality of other leaning vehicles 200A are lined up side by side as illustrated in Fig. 4, or the like) continues over a reference time or a reference travel distance based on the surrounding environment information acquired by the acquisition unit 21, and in a case where the determination is positive, the execution unit 22 automatically validates the group ride mode. The execution unit 22 may specify other leaning vehicles 200A located in a lane DL in which the leaning vehicle 100 travels, and may set only the specified other leaning vehicles 200A as a determination target, or the execution unit 22 may specify other leaning vehicles 200A which are continuously located at the periphery of the leaning vehicle 100 over the reference time or the reference travel distance without using a boundary information about the lane DL, and may set the specified other leaning vehicles 200A as a determination target.

For example, validity and invalidity of the group ride mode can be switched by a setting input by the rider, and the execution unit 22 determines whether or not the group ride mode is operable based on an output from the setting input device 13 that is acquired by the acquisition unit 21. Note that, the execution unit 22 automatically suggests validation and/or invalidation of the group ride mode based on the surrounding environment information acquired by the acquisition unit 21, and the suggestion may be determined by a setting input of approval by the rider.

In a case where the group ride mode is invalid, the execution unit 22 causes the leaning vehicle 100 to execute an operation of a performing positional relationship adjustment control with respect to one peripheral vehicle 200 that actually exists at the periphery of the leaning vehicle 100 as the automatic acceleration and deceleration operation. In addition, in a case where the group ride mode is operable, the execution unit 22 causes the leaning vehicle 100 to execute an operation of performing positional relationship adjustment control with respect to one virtual moving object that represents the plurality of peripheral vehicles 200 near the leaning vehicle 100 as the automatic acceleration and deceleration operation. Regardless of an operation of the braking device 30 and the drive device 40 by the rider, the positional relationship adjustment control may be an operation of automatically causing deceleration or acceleration to occur in the leaning vehicle 100 to adjust a positional relationship between the leaning vehicle 100 and one peripheral vehicle 200 or one virtual moving object (for example, an adaptive cruise control operation in which the one peripheral vehicle 200 or the virtual moving object is set as a speed tracking target, an operation of decelerating or accelerating the leaning vehicle 100 to avoid or mitigate collision with respect to the one peripheral vehicle 200 or the virtual moving object, an operation of operating the braking device 30 to control an inter-vehicle distance with respect to the one peripheral vehicle 200 or the virtual moving object to a distance corresponding to an operation amount in a state in which the rider is operating the drive device 40, an operation of operating the drive device 40 to control an inter-vehicle distance with respect to the one peripheral vehicle 200 or the virtual moving object to a distance corresponding to an operation amount in a state in which the rider is operating the braking device 30, and the like). In addition, the positional relationship adjustment control may be an operation of adjusting a positional relationship between the leaning vehicle 100 and the one peripheral vehicle 200 or the virtual moving object by automatically increasing or decreasing braking power that occurs in the leaning vehicle 100 so as to correct excess or deficiency of the operation on the braking device 30 by the rider, or may be an operation of adjusting the positional relationship between the leaning vehicle 100 and the one peripheral vehicle 200 or the virtual moving object by automatically increasing or decreasing drive power that occurs in the leaning vehicle 100 so as to correct excess or deficiency of the operation on the drive device 40 by the rider.

Note that, in a case where the automatic acceleration and deceleration operation is intended to support driving by the rider with respect to an event occurring on a forward side of the leaning vehicle 100, the execution unit 22 performs positional relationship adjustment control with respect to one peripheral vehicle 200 located on a forward side of the leaning vehicle 100, or one virtual moving object that represents the plurality of peripheral vehicles 200 located on a forward side of the leaning vehicle 100. The same applies in a case where the automatic acceleration and deceleration operation is intended to support driving by the rider with respect to an event that occurs in a backward side, a leftward side, or a rightward side of the leaning vehicle 100.

When the group ride mode is operable, the execution unit 22 preferably causes the leaning vehicle 100 to execute, as the automatic acceleration and deceleration operation, the positional relationship adjustment control so that the positional relationship between the leaning vehicle 100 and a virtual moving object. The group ride mode is a mode in which a group of leaning vehicles including the leaning vehicle 100 and other vehicles 200A. The virtual moving object represents the other vehicles 200A only. It may be determined whether another leaning vehicle is included in the other vehicles 200A based on information registered in advance by the rider. The information registered in advance by the rider may be, e.g., information about a traveling position of the leaning vehicle 100 in the group and an identification information about the other leaning vehicles 200A belonging to the group. For another example, it may be determined whether another leaning vehicle is included in the other vehicles 200A based on information about a change in the positional relationship between the leaning vehicle 100 and the other vehicle over time.

When the group ride mode is operable, the execution unit 22 preferably causes the leaning vehicle 100 to execute, as the automatic acceleration and deceleration operation, the positional relationship adjustment control so that the positional relationship between the leaning vehicle 100 and a virtual moving object. According to this example, the virtual moving object represents at least a first vehicle of the other vehicles 200A and a second vehicle of the other vehicles 200A. Specifically, the group of the leaning vehicles forms a first line L1 and a second line L2 in the group ride. The leaning vehicle 100 and the first leaning vehicle the first vehicle of the other vehicles 200A are located in the first line L1. The second vehicle of the other vehicles 200A is located in the second line L2. The execution unit 22 identifies at least the first leaning vehicle of the other vehicles 200A and the second leaning vehicle of the other vehicles 200A based on a line information that is information about lines formed by the group. More specifically, the execution unit 22 identifies at least the first leaning vehicle of the other vehicles 200A and the second leaning vehicle of the other vehicles 200A by determining which one of a left line and a right line the leaning vehicle 100 is located inside the lane DL based on the information registered in advance by the rider, e.g., the information about the traveling position of the leaning vehicle 100 in the group, or based on information about a change in the positional relationship between the leaning vehicle 100 and the other leaning vehicles 200A over time.

Hereinafter, as a specific example, description will be given of a case where the executed positional relationship adjustment control is the adaptive cruise control operation in which one virtual moving object is set as a speed tracking target. The same description will be true of a case where another positional relationship adjustment control is executed.

When the group ride mode is operable, the acquisition unit 21 acquires, as the surrounding environment information, the positional relationship information between the leaning vehicle 100 and each one of the other leaning vehicles 200A. In addition, the execution unit 22 determines a target value regarding the positional relationship adjustment control based on the positional relationship information between the leaning vehicle 100 and each one of the other leaning vehicles 200A. In view of simplifying processing performed by the execution unit 22, the acquisition unit 21 preferably acquires a longitudinal positional relationship information about a positional relationship between the leaning vehicle 100 and each one of the other leaning vehicles 200A along the front-rear direction of the leaning vehicle 100. In view of simplifying processing performed by the execution unit 22, the acquisition unit 21 also preferably acquires a lateral positional relationship information about a positional relationship between the leaning vehicle 100 and each one of the other leaning vehicles 200A along the left-right direction of the leaning vehicle 100.

Based on the positional relationship information about the positional relationship between the leaning vehicle 100 and each one of the other leaning vehicles 200A, the execution unit 22 derives a virtual positional relationship information that is information about a virtual positional relationship between the leaning vehicle 100 and each one of the other leaning vehicles 200A. Subsequently, the execution unit 22 determines the target value regarding the positional relationship adjustment control based on the virtual positional relationship information. Here, there may be vehicles 200 around the leaning vehicle 100. As such, the execution unit 22 preferably distinguish the other leaning vehicles 200A from the vehicles 200 based on the line information that is information about lines formed by the group of the lean vehicles. More specifically, the execution unit 22 determines a weight with respect to each one of the other leaning vehicles 200A and derives the virtual positional relationship information by assigning the weight to formula 1 shown below. Then, the execution unit 22 determines a target value of an output from the braking device 30 or a target value of an output from the drive device 40 so that the positional relationship between the leaning vehicle 100 and the virtual moving object, which is explained as the positional relationship information, is optimized.

(Formula 1)

$$PV = P1 \times k1 + P2 \times k2$$

In formula 1, PV represents the virtual positional relationship information. P1 represents the positional relationship information that is information about a positional relationship between the leaning vehicle 100 and a first closest leaning vehicle. The first closest leaning vehicle is one of the other leaning vehicles 200A and is closest to the leaning vehicle 100 among the other leaning vehicles 200A located in the first line L1. k1 represents the weight of the first closest leaning vehicle. P2 represents the positional relationship information that is information about a positional relationship between the leaning vehicle 100 and a second closest leaning vehicle. The second closest leaning vehicle is one of the other leaning vehicles 200A and is closest to the leaning vehicle 100 among the other leaning vehicles 200A located in the second line L2. k2 represents the weight of the second closest leaning vehicle. The sum of the weight k1 and the weight k2 is 1. Each of the weight k1 and the weight k2 is determined to be larger than 0 and smaller than 1. The weight k1 can be 0 or 1. The weight k2 also can be 0 or 1. When one of the weight k1 and the weight k2 is 0 or 1, the positional relationship adjustment control is performed with respect to existing one of the first closest leaning vehicle and the second closest leaning vehicle. The execution unit 22 may use, as the positional relationship information P1, the longitudinal positional relationship information that is information about the positional relationship between the leaning vehicle 100 and the first closest leaning vehicle along the longitudinal direction. The execution unit 22 may determine the weight k1 based on the positional relationship information P1 that is information about the positional relationship between the leaning vehicle 100 and the first closest leaning vehicle along the lateral direction. The execution unit 22 may determine the weight k2 based on the longitudinal positional relationship information P2 that is information about the positional relationship between the leaning vehicle 100 and the second closest leaning vehicle along the longitudinal direction. That is, the execution unit 22 preferably determines the weight k1 and the weight k2 based on the surrounding environment information acquired by the acquisition unit 21. As an example, the weight k1 may be a fixed value that is set in advance regardless of the lateral positional relationship information that is information about the positional relationship between the leaning vehicle 100 and the first closest leaning vehicle along the lateral direction. The weight k2 also may be a fixed value that is set in advance regardless of the lateral positional relationship information that is information about the positional relationship between the leaning vehicle 100 and the second closest leaning vehicle along the lateral direction. The weight k1 and the weight k2 may be set by a rider as needed. That is, the acquisition unit 21 may acquire a setting information that is information about a setting input by the rider, and the execution unit 22 may determine the weight k1 and the weight k2 based on the setting information input by the rider.

As another example, the acquisition unit 21 acquires a separate positional relationship information with respect to each of the other leaning vehicles 200A, and the execution unit 22 sets a separate target value based on the separate positional relationship information. The separate target value is used in a separate positional relationship adjustment control executed with respect to each of the other leaning vehicles 200A. The execution unit 22 sets the target value regarding the positional relationship adjustment control based on a set of the separate target values of the separate positional relationship adjustment controls. Here, there may be the vehicles 200 around the leaning vehicle 100. As such, the execution unit 22 preferably distinguish the other leaning vehicles 200A from the vehicles 200 based on the line information that is information about lines formed by the group of the lean vehicles. For example, the execution unit 22 determines a separate target value of an output from the braking device 30 and a separate target value of an output from the drive device 40 so that the positional relationship between the leaning vehicle 100 and each of the other leaning vehicles 200A, which is explained as the positional relationship information, is optimized. The execution unit 22 determines the weight with respect to each of the other leaning vehicles 200A. The execution unit 22 determines an actual target value of the output from the braking device 30 and an actual target value of the output from the drive device 40 by assigning the weight to the following formula 2.

(Formula 2)

$$TV = T1 \times k1 + T2 \times k2$$

In formula 2, TV represents an actual target value regarding the positional relationship adjustment control. T1 represents a separate target value with respect to the first closest leaning vehicle. The first closest leaning vehicle is one of the other leaning vehicles 200A and is closest to the leaning vehicle 100 among the other leaning vehicles 200A located in the first line L1. k1 represents the weight of the first closest leaning vehicle. T2 represents a separate target value with respect to the second closest leaning vehicle. The second closest leaning vehicle is one of the other leaning vehicles 200A and is closest to the leaning vehicle 100 among the other leaning vehicles 200A located in the second line L2. k2 represents the weight of the first closest leaning vehicle. The sum of the weight k1 and the weight k2 is 1. Each of the weight k1 and the weight k2 is determined to be larger than 0 and smaller than 1. The weight k1 can be 0 or 1. The weight k2 also can be 0 or 1. When one of the weight k1 and the weight k2 is 0 or 1, the positional relationship adjustment control is performed with respect to existing one of the first closest leaning vehicle and the second closest leaning vehicle. The execution unit 22 may determines the separate target value T1 based on the longitudinal positional relationship information that is information about the positional relationship between the leaning vehicle 100 and the first closest leaning vehicle along the longitudinal direction. The execution unit 22 may determine the weight k1 based on the lateral positional relationship information that is information about the positional relationship between the leaning vehicle 100 and the first closest leaning vehicle along the lateral direction. The execution unit 22 may determines the separate target value T2 based on the longitudinal positional relationship information that is information about the positional relationship between the leaning vehicle 100 and the first closest leaning vehicle along the longitudinal direction. The execution unit 22 may determine the weight k2 based on the lateral positional relationship information that is information about the positional relationship between the leaning vehicle 100 and the first closest leaning vehicle along the lateral direction. That is, the execution unit 22 preferably determines the weight k1 and the weight k2 based on the surrounding environment information acquired by the acquisition unit 21. However, as an example, the weight k1 may be a fixed value that is set in advance regardless of the lateral positional relationship information that is information about the positional relationship between the leaning vehicle 100 and the first closest leaning vehicle along the lateral direction. The weight k2 also may be a fixed value that is set in advance regardless of the lateral positional relationship information that is information about the positional relationship between the leaning vehicle 100 and the second closest leaning vehicle along the lateral direction. The weight k1 and the weight k2 may be set by a rider as needed. That is, the acquisition unit 21 may acquire a setting information that is information about a setting input by the rider, and the execution unit 22 may determine the weight k1 and the weight k2 based on the setting information input by the rider.

The execution unit 22 sets the weight k2 of the second closest leaning vehicle that is located closest to the leaning vehicle 100 among the other leaning vehicles 200A forming the second line L2 to be lower than the weight k1 of the first closest leaning vehicle that is located closest to the leaning vehicle 100 among the other leaning vehicles 200A forming the first line L1. In addition, execution unit 22 increases the weight k2 of the second closest leaning vehicle when the positional relationship information P2 indicates that a degree of proximity, i.e., a distance, between the leaning vehicle 100 and the second closest leaning vehicle along the lateral direction is high or is increasing rapidly.

The virtual moving object may represent the first closest leaning vehicle that is located closest to the leaning vehicle 100 among the other leaning vehicles 200A forming the first line L1 and/or the second closest leaning vehicle that is located closest to the leaning vehicle 100 among the other leaning vehicles 200A forming the second line L2. The virtual moving object may further represent a third closest leaning vehicle that is located second closest to the leaning vehicle 100 among the other leaning vehicles 200A forming the first line L1 and/or a fourth closest leaning vehicle that is located second closest to the leaning vehicle 100 among the other leaning vehicles 200A forming the second line L2. The execution unit 22 sets a weight of the fourth closest leaning vehicle in the second line L2 to be smaller than a weight of the third closest leaning vehicle in the first line L1. The execution unit 22 sets the weight of the third closest leaning vehicle in the first line L1 to be smaller than the weight k1 of the first closest leaning vehicle in the first line L1. The execution unit 22 sets the weight of the fourth closest leaning vehicle in the second line L2 to be smaller than the weight k2 of the second closest leaning vehicle in the second line L2.

When the leaning vehicle 100 or the group of the leaning vehicles is turning a curve, a distance between the leaning vehicle 100 and the other leaning vehicle 200A located in the second line L2 tends to be small. As such, when the leaning vehicle 100 or the group of the leaning vehicles is turning a curve, the execution unit 22 may increases a weight of preceding other leaning vehicle 200A located in front of the leaning vehicle 100 in the second line L2 as compared to the weight when the leaning vehicle 100 or the group of the leaning vehicles travels straight. Accordingly, the leaning vehicle 100 can be maneuvered to keep an appropriate distance between the leaning vehicle 100 and the other leaning vehicle 200A located in the second line L2. The acquisition unit 21 acquires a behavior information about a behavior of the leaning vehicle 100 (e.g., information such as a roll angle, lateral acceleration, a yaw angular velocity, a steering angle) based on an output from the behavior sensor 12. The execution unit 22 can determine whether or not the leaning vehicle 100 or the group of the lean vehicles is turning a curve based on the behavior information acquired by the acquisition unit 21. That is, the execution unit 22 determines the weight based on the behavior information about a behavior of the leaning vehicle 100. The execution unit 22 may determine whether or not the leaning vehicle 100 or the group of the leaning vehicles is turning a curve based on surrounding environment information (for example, information such as behavior information about a behavior of other leaning vehicle 200A, a road shape, a road sign, and GPS positioning) and the like acquired by the acquisition unit 21. That is, the execution unit 22 may determine the weight based on the surrounding environment information on the leaning vehicle 100. The execution unit 22 may further increase the weight of other leaning vehicle 200A that is preceding in the second line L2 as the degree of turning of the leaning vehicle 100 or the group is higher.

When a traveling direction of the leaning vehicle 100 or the group of the leaning vehicles changes rapidly, a distance between the leaning vehicle 100 and the other leaning vehicle 200A located in the second line L2 tends to be small. As such, when an traveling direction of the leaning vehicle 100 or the group of the leaning vehicles changes rapidly, the execution unit 22 may increases a weight of preceding other leaning vehicle 200A located in front of the leaning vehicle 100 in the second line L2 as compared to the weight when the traveling direction of the leaning vehicle 100 or the group of the leaning vehicles is stable. Accordingly, the leaning vehicle 100 can be maneuvered to keep an appropriate distance between the leaning vehicle 100 and the other leaning vehicle 200A located in the second line L2. The acquisition unit 21 acquires the behavior information about a behavior of the leaning vehicle 100 (for example, information such as a variation rate of a roll angle, a variation rate of lateral acceleration, a variation rate of yaw angular velocity, and a variation rate of a steering angle) based on an output from the behavior sensor 12. The execution unit 22 can determine whether or not the traveling direction of the leaning vehicle 100 or the group steeply varies based on the behavior information acquired by the acquisition unit 21. That is, the execution unit 22 determines the weight based on the behavior information about a behavior of the leaning vehicle 100. The execution unit 22 may determine whether or not a posture of the leaning vehicle 100 is unstable by making a reference to a GPS positioning signal of the leaning vehicle 100 as map information. The execution unit 22 may determine whether or not the traveling direction of the leaning vehicle 100 or the group steeply varies based on surrounding environment information (for example, information such as behavior information about behavior of other leaning vehicle 200A, a road shape, a road sign, and GPS positioning) acquired by the acquisition unit 21. That is, the execution unit 22 may determine the weight based on the surrounding environment information on the leaning vehicle 100. The execution unit 22 may further increase the weight of other leaning vehicle 200A that is preceding in the second line L2 as the degree of variation of the traveling direction of the leaning vehicle 100 or the group is higher.

In a state in which the group is predicted to stop, the execution unit 22 may further decrease the weight of other leaning vehicle 200A that is preceding in the second line L2 in comparison to a state in which the group is predicted not to stop. According to this configuration, transition from a state in which the group travels in a mode in which two lines are formed so that the leaning vehicle 100 and the plurality of other leaning vehicles 200A are lined up in a zigzag shape as illustrated in Fig. 3 to a state in which the group stops in a mode in which two lines are formed so that the leaning vehicle 100 and the plurality of other leaning vehicles 200A are lined up side by side as illustrated in Fig. 4 becomes smooth. The acquisition unit 21 acquires behavior information about a behavior of the leaning vehicle 100 (for example, information such as a vehicle speed and deceleration) based on an output from the behavior sensor 12. The execution unit 22 can predict whether or not the group will stop based on the behavior information acquired by the acquisition unit 21. The execution unit 22 may decrease the weight of other leaning vehicle 200A that is preceding in the second line L2 as the vehicle speed of the leaning vehicle 100 becomes lower. That is, the execution unit 22 determines the weight based on the behavior information about a behavior of the leaning vehicle 100. The execution unit 22 may predict whether or not the group will stop based on surrounding environment information (for example, information such as behavior information about a behavior of other leaning vehicle 200A, the degree of congestion, a traffic signal, a stop line, a road sign, and GPS positioning) acquired by the acquisition unit 21. That is, the execution unit 22 may determine the weight based on the surrounding environment information on the leaning vehicle 100.

When some of the other leaning vehicle 200A decelerate rapidly, the execution unit 22 may increase a weight of the some of the other leaning vehicle 200A decelerating rapidly as compared to the weight when the some of the other leaning vehicle 200A do not decelerate rapidly. It is determined whether some of the other leaning vehicle 200A decelerate rapidly based on the surrounding environment information acquired by the acquisition unit 21. That is, the execution unit 22 determines the weight based on the surrounding environment information that is information about environment surrounding the leaning vehicle 100. When at least one of the other leaning vehicle 200A decelerating rapidly belongs to the second line L2, a degree of increase in the weight may be small as compared to a degree of increase in the weight when the at least one of the other leaning vehicle 200A decelerating rapidly belongs to the first line L1. That is, the execution unit 22 may determine the weight based on the line information that is information about lines formed by the group leaning vehicles.

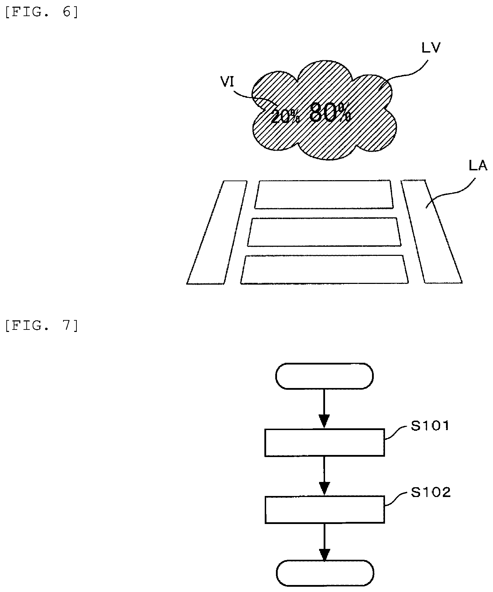

As illustrated in Fig. 5 and Fig. 6, the execution unit 22 executes an operation of causing the notification device 50 to display a mark LV representing a virtual moving object in addition to a mark LA representing the type of the rider supporting operation. The mark LA may be a mark representing an adaptive cruise control operation as illustrated in Fig. 5, or a mark representing a speed tracking mode (for example, a passing time difference mode, an inter-vehicle distance mode, or the like) that is set in the adaptive cruise control operation as illustrated in Fig. 6. The mark LV may be displayed adjacently to the mark LA. The mark LV may be an illustration imitating a vehicle (for example, a motorcycle, a passenger car, or the like), or may be a character or a symbol representing the virtual moving object. When positional relationship adjustment control with respect to one virtual moving object is performed, the execution unit 22 may display a mark that is displayed when positional relationship adjustment control for one actually existing vehicle is performed and represents the vehicle in a different mode (for example, a different color, a different concentration, a different line type, or the like) as the mark LV representing the virtual moving object. Note that, the mark LA representing the type of the rider supporting operation may not be displayed.

The execution unit 22 executes an operation of causing the notification device 50 to display each weight of other leaning vehicle 200A to a rider as information VI of the virtual moving object. For example, in the example illustrated in Fig. 3, in a case where positional relationship adjustment control with respect to one virtual moving object is performed by setting the weight k1 of other leaning vehicle 200A that precedes the leaning vehicle 100 on the closest side in the first line L1 to 0.8, and by setting the weight k2 of other leaning vehicle 200A that precedes the leaning vehicle 100 on the closest side in the second line L2 to 0.2, the weights k1 and k2 may be displayed in a mode corresponding to the positional relationship of the other leaning vehicles 200A with respect to the leaning vehicle 100. The execution unit 22 may cause the notification device 50 to notify the rider of the information VI of the virtual moving object, for example, by another means such as a voice. In addition, the information VI of the virtual moving object may be, for example, another information on the virtual moving object such as the longitudinal positional relationship information P1 or P2, the virtual positional relationship information PV, the separate target values T1 and T2, and the target value TV.

<Operation of Rider Supporting System>

Description will be given of an operation of the rider supporting system according to the embodiment.

Fig. 7 is a view illustrating an operation flow of the controller of the rider supporting system according to the embodiment of the invention.

The controller 20 executes the operation flow illustrated in Fig. 7 while the leaning vehicle 100 travels.

(Acquisition Step)

In step S101, the acquisition unit 21 acquires surrounding environment information on the leaning vehicle 100 while the leaning vehicle 100 travels. In addition, the acquisition unit 21 acquires various pieces of information as necessary.

(Execution Step)

In step S102, the execution unit 22 causes the leaning vehicle 100 to execute an automatic acceleration and deceleration operation based on the surrounding environment information acquired by the acquisition unit 21. When the group ride mode is operable, the execution unit 22 executes, as the automatic acceleration and deceleration operation, the positional relationship adjustment control. The group ride mode is a mode in which a plurality of leaning vehicles including the leaning vehicle 100 and the other leaning vehicles 200A travel in a group. The positional relationship adjustment control is a control in which the positional relationship between the leaning vehicle 100 and the virtual moving object, which represents the other leaning vehicles 200A, is adjusted.

<Effect of Rider Supporting System>

Description will be given of an effect of the rider supporting system according to the embodiment.

According to the controller 20, the execution unit 22 causes the leaning vehicle 100 to execute an automatic acceleration and deceleration operation based on the surrounding environment information acquired by the acquisition unit 21. When the group ride mode is operable, the execution unit 22 executes, as the automatic acceleration and deceleration operation, the positional relationship adjustment control. The group ride mode is a mode in which a plurality of leaning vehicles including the leaning vehicle 100 and the other leaning vehicles 200A travel in a group. The positional relationship adjustment control is a control in which the positional relationship between the leaning vehicle 100 and the virtual moving object, which represents the other leaning vehicles 200A, is adjusted. The leaning vehicle 100 tends to be put in a situation where a distance between the leaning vehicle 100 and an adjacent leaning vehicle of the peripheral vehicles 200 is small. According to the present disclosure, it is possible to cause the leaning vehicle 100 to appropriately execute the automatic acceleration and deceleration operation in such a situation. Therefore, the rider can be assisted in driving the leaning vehicle 100.

Preferably, the virtual moving object represents only the other leaning vehicles 200A belonging to the group. According to this configuration, in the group ride mode, it is possible to correspond to congestion that occurs in the lane DL in which the leaning vehicle 100 travels. Therefore, the rider can be assisted in driving the leaning vehicle 100.

Particularly, the virtual moving object may represent other leaning vehicle 200A belonging to the first line L1 to which the leaning vehicle 100 belongs, and other leaning vehicle 200A belonging to the second line L2 to which the leaning vehicle 100 does not belong. According to this configuration, it is possible to correspond to congestion that occurs when the leaning vehicle 100 and the plurality of leaning vehicles 200A travel in a unique mode that cannot be employed in other vehicles (for example, a passenger vehicle, a truck, and the like). Therefore, the rider can be assisted in driving the leaning vehicle 100.

Preferably, the acquisition unit 21 acquires, as the surrounding environment information, a set of positional relationship information P1, P2 that is information about positional relationships between the leaning vehicle 100 and respective ones of the peripheral vehicles 200. The execution unit 22 determines the target value TV based on the set of positional relationship information P1, P2. The target value TV is used in the positional relationship adjustment control in which a positional relationship between the leaning vehicle 100 and the virtual moving object is adjusted. For example, the execution unit 22 derives the virtual positional relationship information PV, which is information about a positional relationship between the leaning vehicle 100 and the virtual moving object, based on the set of positional relationship information P1 and P2. Subsequently, the execution unit 22 determines the target value TV based on the virtual positional relationship information PV. In addition, the execution unit 22 determines the separate target value T1 and the separate target value T2 based on the set of positional relationship information P1, P2. The separate target values T1, T2 are used as target values in the separate positional relationship adjustment control that is performed in the respective one of the peripheral vehicles 200. Subsequently, the execution unit 22 determines, based on the separate target values T1, T2 determined for the respective ones of the peripheral vehicles 200, the target value TV used in the positional relationship adjustment control in which a positional relationship between the leaning vehicle 100 and the virtual moving object is adjusted. According to this configuration, the target value TV of the positional relationship adjustment control with respect to the virtual moving object can be appropriately determined.

Particularly, the acquisition unit 21 may acquire positional relationship information between the leaning vehicle 100 and the peripheral vehicles 200 in a longitudinal direction of the leaning vehicle 100, and positional relationship information between the leaning vehicle 100 and the peripheral vehicles 200 in a lateral direction of the leaning vehicle 100 as the plurality of pieces of positional relationship information P1 and P2. According to this configuration, processing in the execution unit 22 is simplified.

Particularly, the execution unit 22 determines the weights k1 and k2 of the plurality of peripheral vehicles 200 for which the plurality of pieces of positional relationship information P1 and P2 are acquired by the acquisition unit 21, and determines the target value TV of the positional relationship adjustment control with respect to one virtual moving object based on the weights k1 and k2. According to the configuration, the target value TV of the positional relationship adjustment control with respect to the virtual moving object can be appropriately determined. For example, the execution unit 22 determines the weights k1 and k2 based on the line information on the group. In addition, for example, the execution unit 22 determines the weights k1 and k2 based on the surrounding environment information acquired by the acquisition unit 21. In addition, for example, the execution unit 22 determines the weights k1 and k2 based on the setting input information that is input by the rider of the leaning vehicle 100. In addition, for example, the execution unit 22 determines the weights k1 and k2 based on the behavior information about a behavior of the leaning vehicle 100. According to the configuration, the target value TV of the positional relationship adjustment control with respect to the virtual moving object can be appropriately determined.

Preferably, the execution unit 22 executes an operation of causing the notification device 50 to display the mark LV representing a virtual moving object. According to this configuration, the rider recognizes that the positional relationship adjustment control with respect to one virtual moving object is performed. Therefore, the rider can be assisted in driving the leaning vehicle 100.

Preferably, the execution unit 22 executes an operation of causing the notification device 50 to give a notification of the information VI of the virtual moving object. According to this configuration, predictability by the rider for the positional relationship adjustment control with respect to the virtual moving object can be improved. Therefore, the rider can be assisted in driving the leaning vehicle 100.

Hereinbefore, the embodiment has been described, but only a part of the embodiment may be carried out, or a part of the embodiment may be changed to another aspect. That is, the invention is not limited to description of the embodiment.

For example, hereinbefore, description has been given of a case where the acquisition unit 21 acquires the plurality of pieces of positional relationship information P1 and P2 between the leaning vehicle 100 and the peripheral vehicles 200 based on the output from the surrounding environment sensor 11, but the acquisition unit 21 may acquire the plurality of pieces of positional relationship information P1 and P2 between the leaning vehicle 100 and the peripheral vehicles 200 by using another means (for example, radio communication between the leaning vehicle 100 and the peripheral vehicles 200, radio communication between the leaning vehicle 100 and a peripheral infrastructure facility, and the like).

Reference Signs List

    1: Rider supporting system
    11: Surrounding environment sensor
    12: Behavior sensor
    13: Setting input device
    20: Controller
    21: Acquisition unit
    22: Execution unit
    30: Braking device
    40: Drive device
    50: Notification device
    100: Leaning vehicle
    200: Peripheral vehicle
    200A: Another leaning vehicle
    DL: Lane
    L1: First line
    L2: Second line
    LA: Mark representing type of rider supporting operation
    LV: Mark representing virtual moving object
    VI: Information on virtual moving object

**Claims**

1. A controller (20) configured to maneuver a leaning vehicle (100), comprising:

    an acquisition unit (21) that is configured to acquire a surrounding environment information that is information about an environment surrounding the leaning vehicle (100), the acquisition unit (21) configured to acquire the surrounding environment information while the leaning vehicle (100) travels; and
    an execution unit (22) that is configured to cause the leaning vehicle (100) to execute an automatic acceleration and deceleration operation based on the surrounding environment information acquired by the acquisition unit (21),
    **characterized in that**
    when a group ride mode in which the leaning vehicle (100) travels together with a plurality of other leaning vehicles (200A) in a group is operable, the execution unit (22) causes the leaning vehicle (100) to execute, as the automatic acceleration and deceleration operation, a positional relationship adjustment control with respect to a virtual moving object that represents a plurality of peripheral vehicles (200) near the leaning vehicle (100).

2. The controller (20) according to claim 1, wherein the virtual moving object represents only the plurality of other leaning vehicles (200A) belonging to the group.

3. The controller (20) according to claim 2, wherein the virtual moving object represents:

the plurality of other leaning vehicles (200A) forming a first line (L1) to which the leaning vehicle (100) belongs; and
the plurality of other leaning vehicles (200A) forming a second line (L2) to which the leaning vehicle (100) does not belong.

4. The controller (20) according to any one of claims 1 to 3, wherein

the acquisition unit (21) is configured to acquire, as the surrounding environment information, a set of positional relationship information (P1, P2) that is information about a plurality of positional relationships between the leaning vehicle (100) and respective ones of the peripheral vehicles (200), and
the execution unit (22) is configured to determine, based on the set of positional relationship information (P1, P2), a target value (TV) used in the positional relationship adjustment control performed with respect to the virtual moving object.

5. The controller (20) according to claim 4, wherein the execution unit (22) is configured to:

derive a virtual positional relationship information (PV) based on the set of positional relationship information (P1, P2), the virtual positional relationship information (PV) is information about a positional relationship between the leaning vehicle (100) and the virtual moving object, and
determine, based on the virtual positional relationship information (PV), the target value (TV) used in the positional relationship adjustment control performed with respect to the virtual moving object.

6. The controller (20) according to claim 4, wherein the execution unit (22) is configured to:

determine a separate target value (T1, T2) based on the set of positional relationship information (P1, P2), the separate target value (T1, T2) is set with respect to the respective ones of the peripheral vehicles (200) and used in the positional relationship adjustment control performed with respect to the respective ones of the peripheral vehicles (200); and
determine, based on the separate target value (T1, T2), the target value (TV) that is used in the positional relationship adjustment control performed with respect to the virtual moving object.

7. The controller (20) according to any one of claims 4 to 6, wherein
the acquisition unit (21) is configured to acquire, as the positional relationship information (P1, P2),:

a longitudinal positional relationship information that is information about a positional relationship between the leaning vehicle (100) and the respective ones of peripheral vehicles (200) along a front-rear direction of the leaning vehicle (100); and
a lateral positional relationship information that is information about a positional relationship between the leaning vehicle (100) and the respective ones of peripheral vehicles (200) in a left-right direction of the leaning vehicle (100).

8. The controller (20) according to any one of claims 4 to 7, wherein
the execution unit (22) is configured to:

determine a weight (k1, K2) with respect to each of the plurality of peripheral vehicles (200) for which the positional relationship information (P1, P2) is acquired by the acquisition unit (21); and
determine, based on the weight (k1, k2), the target value (TV) that is used in the positional relationship adjustment control performed with respect to the virtual moving object.

9. The controller (20) according to claim 8, wherein the execution unit (22) is configured to determine the weight (k1, k2) based on a line information that is information about a line formed by the group.

10. The controller (20) according to claim 8 or 9, wherein the execution unit (22) is configured to determine the weight (k1, k2) based on the surrounding environment information acquired by the acquisition unit (21).

11. The controller (20) according to any one of claims 8 to 10, wherein
the execution unit (22) is configured to determine the weight (k1, k2) based on a setting information that is information about an input by a rider of the leaning vehicle (100).

12. The controller (20) according to any one of claims 8 to 11, wherein
the execution unit (22) is configured to determine the weight (k1, k2) based on a behavior information that is information about a behavior of the leaning vehicle (100).

13. The controller according to any one of claims 1 to 12, wherein
the execution unit (22) is configured to execute an operation that causes a notification device (50) to display a mark (LV) representing the virtual moving object.

14. The controller (20) according to any one of claims 1 to 13, wherein
the execution unit (22) executes an operation that causes a notification device (50) to notify of an information (VI) about the virtual moving object.

15. A control method for maneuvering a leaning vehicle (100), the control method comprising:

acquiring, using an acquisition unit (21) of a controller (20), a surrounding environment information that is information about an environment surrounding the leaning vehicle (100), the acquisition unit (21) configured to acquire the surrounding environment information while the leaning vehicle (100) travels; and
causing, using an execution unit (22) of the controller (20), the leaning vehicle (100) to execute an automatic acceleration and deceleration operation based on the surrounding environment information acquired by the acquisition unit (21), **characterized in that**
when a group ride mode in which the leaning vehicle (100) travels together with a plurality of other leaning vehicles (200A) in a group is operable, the execution unit (22) causes the leaning vehicle (100) to execute, as the automatic acceleration and deceleration operation, a positional relationship adjustment control with respect to a virtual moving object that represents a plurality of peripheral vehicles (200) near the leaning vehicle (100).

**Patentansprüche**

1. Steuerung (20), dazu ausgelegt, ein Neigefahrzeug (100) zu manövrieren, die Folgendes umfasst:

eine Erfassungseinheit (21), die dazu ausgelegt ist, Umgebungsinformationen zu erfassen, die Informationen über eine Umgebung sind, die das Neigefahrzeug (100) umgibt, wobei die Erfassungseinheit (21) dazu ausgelegt ist, die Umgebungsinformationen zu erfassen, während das Neigefahrzeug (100) fährt; und
eine Ausführungseinheit (22), die dazu ausgelegt ist, das Neigefahrzeug (100) zu veranlassen, einen automatischen Beschleunigungs- und Verzögerungsvorgang basierend auf den Umgebungsinformationen auszuführen, die durch die Erfassungseinheit (21) erfasst werden, **dadurch gekennzeichnet, dass**
wenn ein Gruppenfahrmodus, in dem sich das Neigefahrzeug (100) zusammen mit einer Mehrzahl von anderen Neigefahrzeugen (200A) in einer Gruppe bewegt, betreibbar ist, die Ausführungseinheit (22) das Neigefahrzeug (100) veranlasst, als den automatischen Beschleunigungs- und Verzögerungsvorgang eine Positionsbeziehungsanpassungssteuerung in Bezug auf ein virtuelles sich bewegendes Objekt auszuführen, das eine Mehrzahl von peripheren Fahrzeuge (200) in der Nähe des Neigefahrzeugs (100) repräsentiert.

2. Steuerung (20) nach Anspruch 1, wobei
das virtuelle sich bewegende Objekt nur die Mehrzahl von anderen Neigefahrzeugen (200A) repräsentiert, die zu der Gruppe gehören.

3. Steuerung (20) nach Anspruch 2, wobei
das virtuelle sich bewegende Objekt Folgendes repräsentiert:

die Mehrzahl von anderen Neigefahrzeugen (200A), die eine erste Linie (L1) bilden, zu der das Neigefahrzeug (100) gehört; und
die Mehrzahl von anderen Neigefahrzeugen (200A), die eine zweite Linie (L2) bilden, zu der das Neigefahrzeug (100) nicht gehört.

4. Steuerung (20) nach einem der Ansprüche 1 bis 3, wobei

die Erfassungseinheit (21) dazu ausgelegt ist, als Umgebungsinformationen einen Satz von Positionsbeziehungsinformationen (P1, P2) zu erfassen, der Informationen über eine Mehrzahl von Positionsbeziehungen zwischen dem Neigefahrzeug (100) und jeweiligen der peripheren Fahrzeuge (200) ist, und
die Ausführungseinheit (22) dazu ausgelegt ist, basierend auf dem Satz von Positionsbeziehungsinformationen (P1, P2) einen Zielwert (TV) zu bestimmen, der in der Positionsbeziehungsanpassungssteuerung verwendet wird, die in Bezug auf das virtuelle sich bewegende Objekt durchgeführt wird.

5. Steuerung (20) nach Anspruch 4, wobei
die Ausführungseinheit (22) ausgelegt ist zum:

Ableiten einer virtuellen Positionsbeziehungsinformation (PV) basierend auf dem Satz von Positionsbeziehungsinformationen (P1, P2), wobei die virtuellen Positionsbeziehungsinformationen (PV) Informationen über eine Positionsbeziehung zwischen dem Neigefahrzeug (100) und dem virtuellen sich bewegenden Objekt sind, und
Bestimmen, basierend auf den virtuellen Posi-tionsbeziehungsinformationen (PV), des Ziel-werts (TV), der in der Positionsbeziehungsanpassungssteuerung verwendet wird, die in Bezug auf das virtuelle sich bewegende Objekt durchgeführt wird.

6. Steuerung (20) nach Anspruch 4, wobei
die Ausführungseinheit (22) ausgelegt ist zum:

Bestimmen eines separaten Zielwerts (T1, T2) basierend auf dem Satz von Positionsbeziehungsinformationen (P1, P2), wobei der separate Zielwert (T1, T2) in Bezug auf die jeweiligen der peripheren Fahrzeuge (200) festgelegt und in der Positionsbeziehungsanpassungssteuerung verwendet wird, die in Bezug auf die jeweiligen der peripheren Fahrzeuge (200) durchgeführt wird; und
Bestimmen, basierend auf dem separaten Zielwert (T1, T2), des Zielwerts (TV), der in der Positionsbeziehungsanpassungssteuerung verwendet wird, die in Bezug auf das virtuelle sich bewegende Objekt durchgeführt wird.

7. Steuerung (20) nach einem der Ansprüche 4 bis 6, wobei
die Erfassungseinheit (21) dazu ausgelegt ist, als die Positionsbeziehungsinformationen (P1, P2) Folgendes zu erfassen:

eine longitudinale Positionsbeziehungsinformation, die Informationen über eine Positionsbeziehung zwischen dem Neigefahrzeug (100) und den jeweiligen der peripheren Fahrzeuge (200) entlang einer Front-Heck-Richtung des Neigefahrzeugs (100) sind; und
Laterale Positionsbeziehungsinformationen, die Informationen über eine Positionsbeziehung zwischen dem Neigefahrzeug (100) und den jeweiligen peripheren Fahrzeugen (200) in einer Links-Rechts-Richtung des Neigefahrzeugs (100) sind.

8. Steuerung (20) nach einem der Ansprüche 4 bis 7, wobei
die Ausführungseinheit (22) ausgelegt ist zum:

Bestimmen einer Gewichtung (k1, K2) in Bezug auf jedes der Mehrzahl von peripheren Fahrzeuge (200), für die die Positionsbeziehungsinformationen (P1, P2) durch die Erfassungseinheit (21) erfasst werden; und
Bestimmen, basierend auf dem Gewicht (k1, k2), des Zielwerts (TV), der in der Positionsbeziehungsanpassungssteuerung verwendet wird, die in Bezug auf das virtuelle sich bewegende Objekt durchgeführt wird.

9. Steuerung (20) nach Anspruch 8, wobei
die Ausführungseinheit (22) dazu ausgelegt ist, die Gewichtung (k1, k2) basierend auf einer Linieninformation zu bestimmen, die Informationen über eine durch die Gruppe gebildete Linie ist.

10. Steuerung (20) nach Anspruch 8 oder 9, wobei
die Ausführungseinheit (22) dazu ausgelegt ist, die Gewichtung (k1, k2) basierend auf den Umgebungsinformationen zu bestimmen, die durch die Erfassungseinheit (21) erfasst werden.

11. Steuerung (20) nach einem der Ansprüche 8 bis 10, wobei
die Ausführungseinheit (22) dazu ausgelegt ist, die Gewichtung (k1, k2) basierend auf Einstellungsinformationen zu bestimmen, die Informationen über eine Eingabe durch einen Fahrer des Neigefahrzeugs (100) sind.

12. Steuerung (20) nach einem der Ansprüche 8 bis 11, wobei
die Ausführungseinheit (22) dazu ausgelegt ist, die Gewichtung (k1, k2) basierend auf Verhaltensinformationen zu bestimmen, die Informationen über ein Verhalten des Neigefahrzeugs (100) sind.

13. Steuerung nach einem der Ansprüche 1 bis 12, wobei die Ausführungseinheit (22) dazu ausgelegt ist, eine Operation auszuführen, die eine Benach-richtigungsvorrichtung (50) veranlasst, eine Markie-rung (LV) anzuzeigen, die das virtuelle sich bewegende Objekt repräsentiert.

14. Steuerung (20) nach einem der Ansprüche 1 bis 13, wobei
die Ausführungseinheit (22) eine Operation ausführt, die eine Benachrichtigungsvorrichtung (50) veranlasst, über Informationen (VI) über das virtuelle sich bewegende Objekt zu benachrichtigen.

15. Steuerungsverfahren zum Manövrieren eines Neigefahrzeugs (100), wobei das Steuerungsverfahren Folgendes umfasst:

Erfassen, unter Verwendung einer Erfassungseinheit (21) einer Steuerung (20), von Umgebungsinformationen, die Informationen über eine Umgebung sind, die das Neigefahrzeug (100) umgibt, wobei die Erfassungseinheit (21) dazu ausgelegt ist, die Umgebungsinformationen zu erfassen, während das Neigefahrzeug (100) fährt; und

Veranlassen, unter Verwendung einer Ausführungseinheit (22) der Steuerung (20), des Neigefahrzeugs (100), einen automatischen Beschleunigungs- und Verzögerungsvorgang basierend auf den Umgebungsinformationen, die durch die Erfassungseinheit (21) erfasst werden, auszuführen, **dadurch gekennzeichnet, dass**

wenn ein Gruppenfahrmodus, in dem sich das Neigefahrzeug (100) zusammen mit einer Mehrzahl von anderen Neigefahrzeugen (200A) in einer Gruppe bewegt, betreibbar ist, die Ausführungseinheit (22) das Neigefahrzeug (100) veranlasst, als den automatischen Beschleunigungs- und Verzögerungsvorgang eine Positionsbeziehungsanpassungssteuerung in Bezug auf ein virtuelles sich bewegendes Objekt auszuführen, das eine Mehrzahl von peripheren Fahrzeuge (200) in der Nähe des Neigefahrzeugs (100) repräsentiert.

## Revendications

1. Dispositif de commande (20) configuré pour manœuvrer un véhicule à inclinaison (100), comprenant :

    une unité d'acquisition (21) qui est configurée pour acquérir des informations de l'environnement alentour qui sont des informations relatives à un environnement aux alentours du véhicule à inclinaison (100), l'unité d'acquisition (21) étant configurée pour acquérir les informations de l'environnement alentour pendant que le véhicule à inclinaison (100) se déplace ; et
    une unité d'exécution (22) qui est configurée pour amener le véhicule à inclinaison (100) à exécuter une opération d'accélération et de décélération automatique sur la base des informations de l'environnement alentour acquises par l'unité d'acquisition (21), **caractérisé en ce que** lorsqu'un mode conduite de groupe dans lequel le véhicule à inclinaison (100) se déplace conjointement à une pluralité d'autres véhicules à inclinaison (200A) dans un groupe peut être actionné, l'unité d'exécution (22) amène le véhicule à inclinaison (100) à exécuter, en tant qu'opération d'accélération et de décélération automatique, une commande d'ajustement de relation de position par rapport à un objet mobile virtuel qui représente une pluralité de véhicules périphériques (200) proches du véhicule à inclinaison (100).

2. Dispositif de commande (20) selon la revendication 1, dans lequel
    l'objet mobile virtuel représente uniquement la pluralité d'autres véhicules à inclinaison (200A) appartenant au groupe.

3. Dispositif de commande (20) selon la revendication 2, dans lequel
    l'objet mobile virtuel représente :

    la pluralité d'autres véhicules à inclinaison (200A) formant une première ligne (L1) à laquelle le véhicule à inclinaison (100) appartient ; et
    la pluralité d'autres véhicules à inclinaison (200A) formant une seconde ligne (L2) à laquelle le véhicule à inclinaison (100) n'appartient pas.

4. Dispositif de commande (20) selon l'une quelconque des revendications 1 à 3, dans lequel

    l'unité d'acquisition (21) est configurée pour acquérir, en tant qu'informations de l'environnement alentour, un ensemble d'informations de relation de position (P1, P2) qui sont des informations relatives à une pluralité de relations de position entre le véhicule à inclinaison (100) et des véhicules respectifs des véhicules périphériques (200), et
    l'unité d'exécution (22) est configurée pour déterminer, sur la base de l'ensemble d'informations de relation de position (P1, P2), une valeur cible (TV) utilisée dans la commande d'ajustement de relation de position exécutée par rapport à l'objet mobile virtuel.

5. Dispositif de commande (20) selon la revendication 4, dans lequel
    l'unité d'exécution (22) est configurée pour :

    dériver des informations de relation de position virtuelle (PV) sur la base de l'ensemble d'informations de relation de position (P1, P2), les informations de relation de position virtuelle (PV) étant des informations relatives à une relation de position entre le véhicule à inclinaison (100) et l'objet mobile virtuel, et
    déterminer, sur la base des informations de relation de position virtuelle (PV), la valeur cible (TV) utilisée dans la commande d'ajustement de relation de position exécutée par rapport à l'objet mobile virtuel.

**6.** Dispositif de commande (20) selon la revendication 4, dans lequel

l'unité d'exécution (22) est configurée pour :

déterminer une valeur cible séparée (T1, T2) sur la base de l'ensemble d'informations de relation de position (P1, P2), la valeur cible séparée (T1, T2) étant définie par rapport aux véhicules respectifs des véhicules périphériques (200) et utilisée dans la commande d'ajustement de relation de position exécutée par rapport aux véhicules respectifs des véhicules périphériques (200) ; et

déterminer, sur la base de la valeur cible séparée (T1, T2), la valeur cible (TV) utilisée dans la commande d'ajustement de relation de position exécutée par rapport à l'objet mobile virtuel.

**7.** Dispositif de commande (20) selon l'une quelconque des revendications 4 à 6, dans lequel

l'unité (21) d'acquisition est configurée pour acquérir, en tant qu'informations de relation de position (P1, P2) :

des informations de relation de position longitudinale qui sont des informations relatives à une relation de position entre le véhicule à inclinaison (100) et les véhicules respectifs des véhicules périphériques (200) dans le sens avant-arrière du véhicule à inclinaison (100) ; et

des informations de relation de position latérale qui sont des informations relatives à une relation de position entre le véhicule à inclinaison (100) et les véhicules respectifs des véhicules périphériques (200) dans le sens gauche-droite du véhicule à inclinaison (100).

**8.** Dispositif de commande (20) selon l'une quelconque des revendications 4 à 7, dans lequel

l'unité d'exécution (22) est configurée pour :

déterminer un poids (k1, K2) par rapport à chacun de la pluralité de véhicules périphériques (200) pour lesquels les informations de relation de position (P1, P2) sont acquises par l'unité d'acquisition (21) ; et

déterminer, sur la base du poids (k1, k2), la valeur cible (TV) utilisée dans la commande d'ajustement de relation de position exécutée par rapport à l'objet mobile virtuel.

**9.** Dispositif de commande (20) selon la revendication 8, dans lequel

l'unité d'exécution (22) est configurée pour déterminer le poids (k1, k2) sur la base d'informations de ligne qui sont des informations relatives à une ligne formée par le groupe.

**10.** Dispositif de commande (20) selon la revendication 8 ou la revendication 9, dans lequel

l'unité d'exécution (22) est configurée pour déterminer le poids (k1, k2) sur la base des informations de l'environnement alentour acquises par l'unité d'acquisition (21).

**11.** Dispositif de commande (20) selon l'une quelconque des revendications 8 à 10, dans lequel

l'unité d'exécution (22) est configurée pour déterminer le poids (k1, k2) sur la base d'informations de paramètre qui sont des informations relatives à une saisie par un conducteur du véhicule à inclinaison (100).

**12.** Dispositif de commande (20) selon l'une quelconque des revendications 8 à 11, dans lequel

l'unité d'exécution (22) est configurée pour déterminer le poids (k1, k2) sur la base d'informations de comportement qui sont des informations relatives à un comportement du véhicule à inclinaison (100).

**13.** Dispositif de commande selon l'une quelconque des revendications 1 à 12, dans lequel

l'unité d'exécution (22) est configurée pour exécuter une opération qui amène un dispositif de notification (50) à afficher une marque (LV) représentant l'objet mobile virtuel.

**14.** Dispositif de commande (20) selon l'une quelconque des revendications 1 à 13, dans lequel

l'unité d'exécution (22) exécute une opération qui amène un dispositif de notification (50) à notifier des informations (VI) relatives à l'objet mobile virtuel.

**15.** Procédé de commande pour manœuvrer un véhicule à inclinaison (100), le procédé de commande comprenant :

l'acquisition, au moyen d'une unité d'acquisition (21) d'un dispositif de commande (20), d'informations de l'environnement alentour qui sont des informations relatives à un environnement aux alentours du véhicule à inclinaison (100), l'unité d'acquisition (21) étant configurée pour acquérir les informations de l'environnement alentour pendant que le véhicule à inclinaison (100) se déplace ; et

au moyen d'une unité d'exécution (22) du dispositif de commande (20), le fait d'amener le véhicule à inclinaison (100) à exécuter une opération d'accélération et de décélération automatique sur la base des informations de l'environnement alentour acquises par l'unité d'acquisition (21), **caractérisé en ce que**

lorsqu'un mode conduite de groupe dans lequel le véhicule à inclinaison (100) se déplace conjointement à une pluralité d'autres véhicules à inclinaison (200A) dans un groupe peut être actionné, l'unité d'exécution (22) amène le véhicule à inclinaison (100) à exécuter, en tant qu'opération d'accélération et de décélération automatique, une commande d'ajustement de relation de position par rapport à un objet mobile virtuel qui représente une pluralité de véhicules périphériques (200) proches du véhicule à inclinaison (100).

[FIG. 1]

[FIG. 2]

[FIG. 3]

[FIG. 4]

L2    L1

200, 200A

200, 200A

200

100

200, 200A

200

200, 200A

200, 200A

DL

[FIG. 5]

LV

VI

20% 80%

LA

[FIG. 6]

[FIG. 7]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018197965 A1
- EP 3800099 A1
- US 6032097 A